# EUROPEAN PATENT APPLICATION

(11) **EP 4 811 640 A1**
(43) Date of publication of application: **23.09.2026**
(21) Application number: 24889934.6
(22) Date of filing: 11.03.2024
(51) Int. Cl.: H02M 3/335

(54) **BRIDGE RESONANT CONVERTER AND BIDIRECTIONAL BRIDGE RESONANT CONVERTER**

(30) Priority: 16.11.2023 CN 202311523553
(71) Applicant: Hangzhou Whizpo System Technology Co., Ltd, Zhejiang 311215 (CN)
(72) Inventor: HUANG, Guisong, Hangzhou, Zhejiang 311215 (CN); LIU, Gang, Hangzhou, Zhejiang 311215 (CN)
(74) Representative: Michalski Hüttermann & Partner mbB
(86) International application number: PCT/CN2024/081047
(87) International publication number: WO 2025/102560

(57) **Abstract**

Provided in the present application are a bridge resonant converter and a bidirectional bridge resonant converter. A bidirectional blocking switch is additionally provided in a bridge unit of the bridge resonant converter such that a primary winding or a secondary winding of a transformer can be short-circuited, and the short-circuit time is determined in different manners based on whether a gain between an output voltage and an input voltage is greater than or equal to 1. Based only on two sampling signals, namely the input voltage and the output voltage, which are necessary for controlling the bridge resonant converter, simple control of the bridge resonant converter can be achieved without an additional sampling circuit, and the influence of errors in the sampling signals specially used for controlling the short-circuit time in the prior art on the control is avoided, thereby enabling more precise control.

## Description

### TECHNICAL FIELD

The present application relates to the field of power supplies, and particularly to a bridge resonant converter and a bidirectional bridge resonant converter.

### BACKGROUND

The bridge resonant converter is a highly attractive isolated DC-DC converter. Due to its ability to achieve soft switching over the entire load range, it can reduce switching losses, improve converter efficiency, decrease size, and increase power density, thereby being widely used in various fields.

The bridge resonant converter typically adopts a variable-frequency control method, that is, controlling the operating frequency of its switching transistors. This is a challenge in applications with a wide input voltage range or a wide output voltage range. Because a wide input voltage range or a wide output voltage range implies that the switching frequency range of the bridge resonant converter also increases accordingly. If it is desired to increase the switching frequency range that the controller can provide and the switching frequency range that the switching transistors in the bridge resonant converter can withstand, higher-performance controllers or switching devices are required, which undoubtedly increases the cost of the bridge resonant converter. On the other hand, a wider switching frequency range causes the devices to operate at their limits, resulting in degraded device performance, such as greater interference with other devices, which leads to poor converter reliability. Additionally, it also increases device losses, thereby reducing converter efficiency.

With the development of technology and the diversified demands of market products, bridge resonant converters with a wide input voltage range or a wide output voltage range are needed and expected.

Therefore, providing a bridge resonant converter with high efficiency and high reliability has become a key focus of industry research.

### SUMMARY

The present application provides a bridge resonant converter, including: a first bridge unit; a transformer, including a primary winding and a secondary winding, where one terminal of the first bridge unit is connected to the primary winding, and the other terminal thereof is configured to receive an input voltage; a second bridge unit, one terminal of the second bridge unit is connected to the secondary winding, and the other terminal thereof is configured to provide an output voltage, and including a bidirectional blocking switch connected between both terminals of the secondary winding; a resonant unit, connected between the first bridge unit and the primary winding or between the second bridge unit and the secondary winding; and a controller, configured to receive the input voltage and the output voltage, and output, based on a gain between the output voltage and the input voltage, a switching drive signal for controlling the bidirectional blocking switch, such that the bidirectional blocking switch is turned on within a first time.

Further, each half switching period of the bridge resonant converter includes the first time.

Further, a switching transistor in the second bridge unit is turned off with a delay of a second time relative to a switching transistor in the first bridge unit that operates synchronously therewith.

Further, when the gain is greater than or equal to 1 and when the gain is less than 1, a length of the first time and a length of the second time are set differently.

Further, when the gain is greater than or equal to 1, the length of the first time and the length of the second time are configured according to a first relational expression; and when the gain is less than 1, the length of the first time and the length of the second time are configured according to a second relational expression.

Further, in the first relational expression, the first time is related to an on-time of the switching transistor in the first bridge unit within the half switching period, the gain, and the second time, and the second time is related to the on-time of the switching transistor in the first bridge unit within the half switching period; and in the second relational expression, the first time is related to the on-time of the switching transistor in the first bridge unit within the half switching period, and the second time is related to the on-time of the switching transistor in the first bridge unit within the half switching period and the gain.

Further, the first bridge unit is configured as a half-bridge topology, and both terminals of the primary winding are respectively connected to common nodes of two legs in the first bridge unit.

Further, the second bridge unit is configured as a half-bridge topology, a full-bridge topology, or a three-level half-bridge topology.

The present application further provides a bidirectional bridge resonant converter, including: a first bridge unit, including a first bidirectional blocking switch; a transformer, including a first winding and a second winding, where one terminal of the first bridge unit is connected to the first winding, and the other terminal thereof is configured to receive or output a first voltage, and the first bidirectional blocking switch is connected between both terminals of the first winding; a second bridge unit, one terminal of the second bridge unit is connected to the second winding, and the other terminal thereof is configured to correspondingly output or receive a second voltage, and including a second bidirectional blocking switch connected between both terminals of the second winding; a resonant unit, connected between the first bridge unit and the first winding or between the second bridge unit and the second winding; and a controller, configured to receive the first voltage and the second voltage, where when the bidirectional bridge resonant converter is configured to convert the first voltage into the second voltage, the controller outputs, based on a first gain between the second voltage and the first voltage, a switching drive signal for controlling the second bidirectional blocking switch, such that the second bidirectional blocking switch is turned on within a first time; and when the bidirectional bridge resonant converter is configured to convert the second voltage into the first voltage, the controller outputs, based on a second gain between the first voltage and the second voltage, a switching drive signal for controlling the first bidirectional blocking switch, such that the first bidirectional blocking switch is turned on within a third time.

Further, each half switching period of the bidirectional bridge resonant converter includes the first time or the third time.

Further, a switching transistor in a bridge unit at an output terminal is turned off with a delay of a second time relative to a switching transistor in a bridge unit at an input terminal that operates synchronously therewith.

Further, when the first gain is greater than or equal to 1 and when the first gain is less than 1, a length of the first time and a length of the second time are set differently; and when the second gain is greater than or equal to 1 and when the second gain is less than 1, a length of the third time and the length of the second time are set differently.

Further, when the first gain is greater than or equal to 1, the length of the first time and the length of the second time are configured according to a first relational expression; when the first gain is less than 1, the length of the first time and the length of the second time are configured according to a second relational expression; when the second gain is greater than or equal to 1, the length of the third time and the length of the second time are configured according to the first relational expression; and when the second gain is less than 1, the length of the third time and the length of the second time are configured according to the second relational expression.

Further, when the bidirectional bridge resonant converter is configured to convert the first voltage into the second voltage, in the first relational expression, the first time is related to an on-time of a switching transistor in the first bridge unit within the half switching period, the first gain, and the second time, and the second time is related to the on-time of the switching transistor in the first bridge unit within the half switching period; and in the second relational expression, the first time is related to the on-time of the switching transistor in the first bridge unit within the half switching period, and the second time is related to the on-time of the switching transistor in the first bridge unit within the half switching period and the first gain; and when the bidirectional bridge resonant converter is configured to convert the second voltage into the first voltage, in the first relational expression, the third time is related to an on-time of a switching transistor in the second bridge unit within the half switching period, the second gain, and the second time, and the second time is related to the on-time of the switching transistor in the second bridge unit within the half switching period; and in the second relational expression, the first time is related to the on-time of the switching transistor in the second bridge unit within the half switching period, and the second time is related to the on-time of the switching transistor in the second bridge unit within the half switching period and the second gain.

Further, the first bridge unit is configured as a half-bridge topology, and both terminals of the first winding are respectively connected to common nodes of two legs in the first bridge unit.

Further, the second bridge unit is configured as a half-bridge topology, a full-bridge topology, or a three-level half-bridge topology.

The features and technical advantages of the present disclosure have been outlined rather broadly, such that the detailed description below can be better understood. Additional features and advantages of the present disclosure will be described hereinafter, which form the subject matter of the claims of the present disclosure. It should be understood by those skilled in the art that the disclosed concepts and specific embodiments may be readily used as a basis for modifying or designing other structures or processes for achieving the same purposes of the present disclosure. It should also be recognized by those skilled in the art that such equivalent structures do not depart from the spirit and scope of the present disclosure as set forth in the appended claims.

### BRIEF DESCRIPTION OF THE DRAWINGS

For a more complete understanding of the present disclosure and its advantages, reference is now made to the following description in conjunction with the accompanying drawings, in which:
FIG. 1 shows a schematic diagram of a bridge resonant converter according to an embodiment of the present application;
FIG. 2 shows a schematic circuit diagram of a bridge resonant converter according to an embodiment of the present application;
FIG. 3 shows a schematic diagram of operating waveforms of the bridge resonant converter in FIG. 2;
FIG. 4 shows a schematic module diagram of a controller according to an embodiment of the present application;
FIG. 5 shows a schematic module diagram of a time generation unit in a controller according to an embodiment of the present application;
FIG. 6 shows a schematic diagram of a bidirectional bridge resonant converter according to an embodiment of the present application; and
FIG. 7 shows a schematic circuit diagram of a bidirectional bridge resonant converter according to an embodiment of the present application.

Unless otherwise specified, corresponding reference numerals in different drawings generally refer to corresponding parts. These drawings are provided to clearly illustrate related aspects of various embodiments and are not necessarily drawn to scale.

### DETAILED DESCRIPTION OF THE EMBODIMENTS

The technical solutions in the present application will be described clearly and completely with reference to the accompanying drawings. Apparently, the described embodiments are some rather than all of the embodiments of the present application. All other embodiments obtained by those of ordinary skill in the art based on the embodiments in the present application without creative efforts shall fall within the scope of protection of the present application.

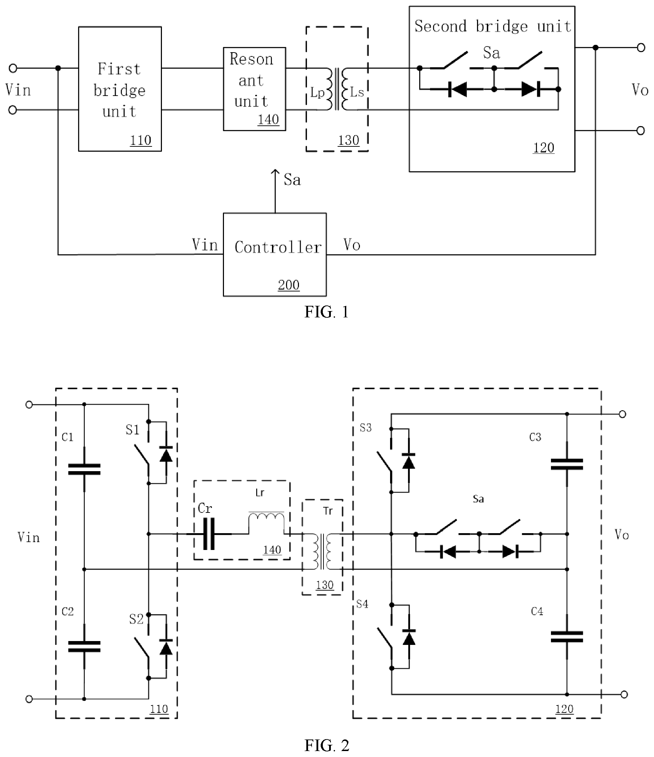

An embodiment of the present application provides a bridge resonant converter. Referring to the schematic diagram of a bridge resonant converter according to an embodiment of the present application as shown in FIG. 1, the bridge resonant converter includes:
a first bridge unit 110;
a transformer 130, including a primary winding Lp and a secondary winding Ls, where one terminal of the first bridge unit 110 is connected to the primary winding Lp, and the other terminal thereof is configured to receive an input voltage Vin;
a second bridge unit 120, one terminal of the second bridge unit 120 is connected to the secondary winding Ls, and the other terminal thereof is configured to provide an output voltage Vo, and including a bidirectional blocking switch Sa connected between both terminals of the secondary winding Ls;
a resonant unit 140, connected between the first bridge unit 110 and the primary winding Lp or between the second bridge unit 120 and the secondary winding Ls; and
a controller 200, configured to receive the input voltage Vin and the output voltage Vo, and output, based on a gain M between the output voltage Vo and the input voltage Vin, a switching drive signal for controlling the bidirectional blocking switch Sa, such that the bidirectional blocking switch Sa is turned on within a first time Ta.

As shown in FIG. 1, the bidirectional blocking switch Sa is connected between both terminals of the secondary winding Ls. When the bidirectional blocking switch Sa is turned on within the first time t1, the secondary winding Ls of the transformer is short-circuited. During this period, a resonant current in the resonant unit 140 gradually increases, an output current of the bridge resonant converter is zero, and energy is stored in a resonant circuit. After the first time t1, the energy in the resonant circuit can be released, thereby forming a BOOST stage. In this way, voltage regulation within a certain range can be achieved and the range of a switching frequency can be reduced. Particularly for a bridge resonant converter with a wide input voltage range or a wide output voltage range, when the input voltage Vin is relatively low, the resonant current can also be increased, such that a gain of the resonant unit is greater than 1, thereby achieving the BOOST stage and reducing the range of the switching frequency.

Further, as described above, in the present application, the switching drive signal Sa for controlling the bidirectional blocking switch Sa is output based only on the gain M between the output voltage Vo and the input voltage Vin. The output voltage Vo and the input voltage Vin are sampling signals necessary for controlling the bridge resonant converter. That is, according to the present application, without an additional sampling circuit, the control of the bridge resonant converter can be achieved merely by the existing controller 200 in the bridge resonant converter based on the existing sampling signals, namely the output voltage Vo and the input voltage Vin. In other words, no dedicated sampling circuit needs to be additionally provided for controlling the bidirectional blocking switch.

Further, no additional sampling is required, thereby avoiding adverse effects on control caused by sampling delay and sampling errors, and enabling more precise control. This improves the reliability of the bridge resonant converter.

Specifically, reference is made to FIG. 2, which shows a schematic circuit diagram of a bridge resonant converter according to an embodiment of the present application. Both the first bridge unit 110 and the second bridge unit 120 are configured as half-bridge topologies. Both terminals of the primary winding Lp are respectively connected to common nodes of two legs of the first bridge unit 110, and both terminals of the secondary winding Ls are respectively connected to common nodes of two legs of the second bridge unit 120.

Specifically, as shown in FIG. 2, the first bridge unit 110 includes a first switching leg including a first upper transistor S1 and a first lower transistor S2 connected in series, and a first capacitor leg including a first capacitor C1 and a second capacitor C2 connected in series, where the first switching leg and the first capacitor leg are connected in parallel to receive the input voltage Vin, and the both terminals of the primary winding Lp are respectively connected to a common node of the first upper transistor S1 and the first lower transistor S2 in the first switching leg and a common node of the first capacitor C1 and the second capacitor C2 in the first capacitor leg. The second bridge unit 120 includes a third switching leg including a third upper transistor S3 and a fourth lower transistor S4 connected in series, and a fourth capacitor leg including a third capacitor C3 and a fourth capacitor C4 connected in series, where the third switching leg and the fourth capacitor leg are connected in parallel to provide the output voltage Vo, and the both terminals of the secondary winding Ls are respectively connected to a common node of the third upper transistor S3 and the fourth lower transistor S4 in the third switching leg and a common node of the third capacitor C3 and the fourth capacitor C4 in the fourth capacitor leg.

As shown in FIG. 2, the resonant unit 140 is configured as an LC series resonant unit including a resonant inductor Lr and a resonant capacitor Cr connected in series. As shown in FIG. 2, the LC series resonant unit is connected between the first bridge unit 110 and the primary winding Lp. In practical applications, the LC series resonant unit may also be connected between the second bridge unit 120 and the secondary winding Ls. Certainly, the resonant unit 140 may also be configured as other structures, such as an LLC resonant unit, the resonant capacitor Cr is shared with the capacitor in the leg of the bridge unit, as long as a resonant cavity is formed between the first bridge unit 110 and the primary winding Lp or between the second bridge unit 120 and the secondary winding Ls.

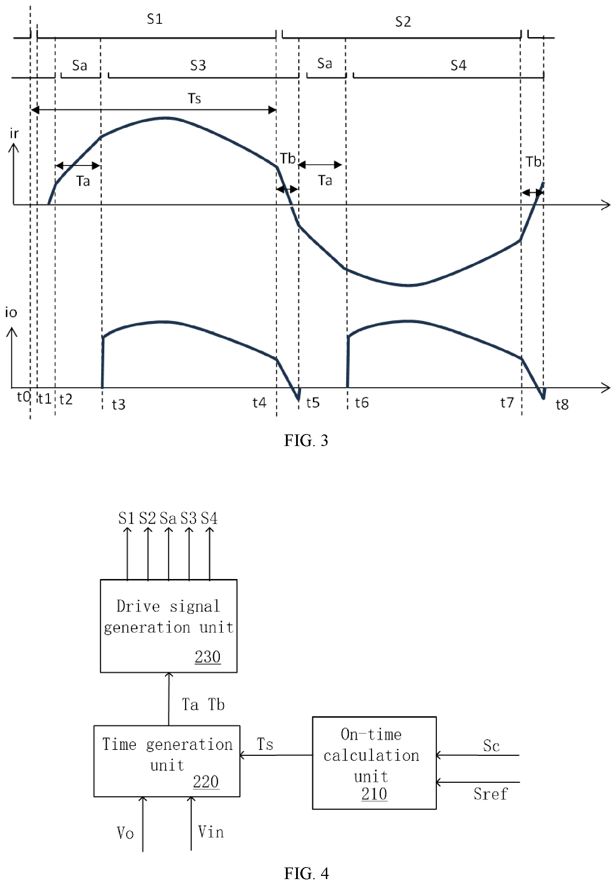

The principle of the present application will be described below using the half-bridge resonant converter shown in FIG. 2, with reference to the schematic diagram of operating waveforms of the bridge resonant converter in FIG. 2 as shown in FIG. 3. It should be noted that the controller 200 also outputs switching drive signals for controlling the first upper transistor S1, the first lower transistor S2, the third upper transistor S3, and the fourth lower transistor S4.

It is known that for variable-frequency control, the switching frequency of switching transistors is controlled by a sampling-based feedback loop. At the corresponding switching frequency, each switching transistor operates at a duty cycle slightly less than 50%, and the upper transistor and the lower transistor of the same leg operate in a complementary manner with a dead time therebetween. At least one switching transistor in the second bridge unit 120 and at least one switching transistor in the first bridge unit 110 form synchronously operating switching transistors. As shown in FIG. 2 and FIG. 3, the first upper transistor S1 and the third upper transistor S3 form a pair of synchronously operating switching transistors. Similarly, the first lower transistor S2 and the fourth lower transistor S4 also form a pair of synchronously operating switching transistors. As shown in FIG. 3, an on-time of one switching transistor (such as an on-time Ts of the first upper transistor S1) forms a half switching period of the bridge resonant converter. Thus, controlling the on-time of the switching transistor (such as the on-time Ts of the first upper transistor S1) is equivalent to controlling the switching frequency of the bridge resonant converter.

Specifically, as shown in FIG. 3, starting from a time point t1, the controller 200 controls the first upper transistor S1 to be turned on for a time Ts until a time point t4. At a time point t2 within the time Ts, the controller 200 controls the bidirectional blocking switch Sa to be turned on for the first time Ta until a time point t3. As can be seen from FIG. 3, during the first time Ta, the output current io of the bridge resonant converter is zero, and the rising slope of the resonant current ir increases. Starting from the time point t3, the controller 200 controls the third upper transistor S3 to be turned on until a time point t5, where the time point t5 is later than the time point t4 by the length of a second time Tb, such that within the interval from the time point t4 to the time point t5, the synchronously operating third upper transistor S3 is turned off with a delay of the second time Tb relative to the first upper transistor S1. Thus, a first half switching period is formed.

Within a second half switching period, the synchronously operating first lower transistor S2 and fourth lower transistor S4, and bidirectional blocking switch Sa are turned on, where the turn on sequence of the first lower transistor S2, the fourth lower transistor S4, and the bidirectional blocking switch Sa is the same as that of the first upper transistor S1, the third upper transistor S3, and the bidirectional blocking switch Sa in the first half switching period, and will not be repeated herein.

Specifically, a dead time may be included between the turn-on and turn-off actions of the switching transistor in the first bridge unit 110, and a dead time may be included between the turn-on and turn-off actions of the switching transistor in the second bridge unit 120, to ensure reliable operation of the bridge resonant converter. It should be noted that the dead time is ignored in the above description.

Thus, each half switching period of the bridge resonant converter includes the first time Ta, such that the secondary winding Ls of the transformer is short-circuited, and the energy is stored in the resonant circuit.

In addition, to improve the efficiency of the bridge resonant converter, it is desirable to achieve zero-current switching (ZCS) for the switching transistor in the second bridge unit 120 of the bridge resonant converter. As shown in FIG. 3, the switching transistor (such as the third switching transistor S3) in the second bridge unit 120 is turned off with a delay of the second time Tb relative to the switching transistor (such as the first switching transistor S1) in the first bridge unit 110 that operates synchronously therewith, such that within the second time Tb, the output current crosses zero and reverses direction. Then, at the end of the second time Tb, the switching transistor in the second bridge unit 120 is turned off. In this way, ZCS can be achieved for the switching transistor in the second bridge unit 120, thereby improving the efficiency of the bridge resonant converter.

To enable the bridge resonant converter to have the boost stage of the first time Ta described above, and to enable the switching transistor in the second bridge unit 120 of the bridge resonant converter to achieve ZCS, ideal operating waveforms of the bridge resonant converter are shown in FIG. 3. Based on the operating waveforms of the bridge resonant converter shown in FIG. 3, the inventor has found through research that the first time Ta and the second time Tb are related to a gain of the bridge resonant converter. Specifically, when the gain of the bridge resonant converter is greater than or equal to 1 and when the gain of the bridge resonant converter is less than 1, the length of the first time Ta and the length of the second time Tb are set differently.

More specifically, when the gain of the bridge resonant converter is greater than or equal to 1, the length of the first time Ta and the length of the second time Tb are configured according to a first relational expression; and when the gain of the bridge resonant converter is less than 1, the length of the first time Ta and the length of the second time Tb are configured according to a second relational expression.

More specifically, in the first relational expression, the first time Ta is related to the on-time Ts of the switching transistor in the first bridge unit 110 of the bridge resonant converter within the half switching period, the gain of the bridge resonant converter, and the turn-off delay time (i.e., the second time Tb) of the switching transistor in the second bridge unit 120 relative to the switching transistor in the first bridge unit 110 that operates synchronously therewith, and the second time Tb is related to the on-time Ts of the switching transistor in the first bridge unit 110 of the bridge resonant converter within the half switching period. In the second relational expression, the first time Ta is related to the on-time Ts of the switching transistor in the first bridge unit 110 of the bridge resonant converter within the half switching period, and the second time Tb is related to the on-time Ts of the switching transistor in the first bridge unit 110 of the bridge resonant converter within the half switching period and the gain of the bridge resonant converter.

Specifically, taking the bridge resonant converter shown in FIG. 2, which is capable of operating in the ideal waveform state shown in FIG. 3, as an example, the first upper transistor S1 and the first lower transistor S2 in the first bridge unit 110 have the same on-time Ts within the half switching period. The bidirectional blocking switch Sa in the second bridge unit 120 has an on-time of the first time Ta and is turned on before the third upper transistor S3 or the fourth lower transistor S4. In the second bridge unit 120, the third upper transistor S3 and the fourth lower transistor S4 have the same on-time, and are respectively turned off after the first upper transistor S1 and the first lower transistor S2, with a lag time of the second time Tb. The turn ratio of the primary and secondary windings of the transformer 130 is n. A = Ta/Ts and B = Tb/Ts are defined, that is, A and B represent the length of the first time Ta and the length of the second time Tb. The inventor has found through research that when the gain M (M = n*Vo/Vin) of the bridge resonant converter is greater than or equal to 1, A and B need to be configured according to the first relational expression.

Specifically, in an embodiment, in the first relational expression, B = b1 + k1. Herein, b1 is a constant generally having a value between 0.01 and 0.05. Certainly, the present application does not limit the specific value of b1, which is related to the specific circuit of the bridge resonant converter. Herein, k1 is a correction term for correcting the value of B, which may be adjusted according to parameters of components in the bridge resonant converter, or may be corrected by multiple experiments after the design of the bridge resonant converter is completed, to obtain a correction term k1 suitable for the bridge resonant converter. Since B = Tb/Ts, it follows that Tb = B*Ts. That is, the second time Tb obtained according to the first relational expression is related to the on-time Ts of the switching transistor in the first bridge unit 110 within the half switching period. Specifically, the second time is the product of the on-time Ts and a coefficient B (B = b1 + k1).

Specifically, in an embodiment, in the first relational expression, A = (M - 1)/M + 2*B + k2, where k2 is a correction term for correcting the value of A, which may be adjusted according to the parameters of the components in the bridge resonant converter, or may be corrected by multiple experiments after the design of the bridge resonant converter is completed, to obtain a correction term k2 suitable for the bridge resonant converter. Since A = Ta/Ts, it follows that Ta = A*Ts = ((M - 1)/M + 2*B + k2)*Ts. That is, the first time Ta obtained according to the first relational expression is related to the on-time Ts of the switching transistor in the first bridge unit 110 of the bridge resonant converter within the half switching period, the gain M of the bridge resonant converter, and the turn-off delay time (i.e., the second time Tb) of the switching transistor in the second bridge unit 120 relative to the switching transistor in the first bridge unit 110 that operates synchronously therewith. Specifically, the first time is the product of the on-time Ts and (M - 1)/M + 2*B + k2.

Specifically, in an embodiment, in the second relational expression, B = (1 - M)/2 + k3, where k3 is also a correction term for correcting the value of B, which may be adjusted according to the parameters of the components in the bridge resonant converter, or may be corrected by multiple experiments after the design of the bridge resonant converter is completed, to obtain a correction term k3 suitable for the bridge resonant converter. Since B = Tb/Ts, it follows that Tb = B*Ts. That is, the second time Tb obtained according to the second relational expression is related to the on-time Ts of the switching transistor in the first bridge unit 110 of the bridge resonant converter within the half switching period and the gain M of the bridge resonant converter. Specifically, the second time is the product of the on-time Ts and (1 - M)/2 + k3.

Specifically, in an embodiment, in the second relational expression, A = b2 + k4. Herein, b2 is a constant generally close to zero. Certainly, the present application does not limit the specific value of b2, which is related to the specific circuit of the bridge resonant converter. Herein, k4 is a correction term for correcting the value of A, which may be adjusted according to the parameters of the components in the bridge resonant converter, or may be corrected by multiple experiments after the design of the bridge resonant converter is completed, to obtain a correction term k4 suitable for the bridge resonant converter. Since A = Ta/Ts, it follows that Ta = (b2 + k4)*Ts. That is, the first time Ta obtained according to the first relational expression is related to the on-time Ts of the switching transistor in the first bridge unit 110 of the bridge resonant converter within the half switching period. Specifically, the first time is the product of the on-time Ts and a coefficient A (A = b2 + k4).

During specific implementation, reference is made to FIG. 4, which shows a schematic module diagram of a controller according to an embodiment of the present application. As shown in FIG. 4, the controller 200 includes an on-time Ts calculation unit 210, which receives an output sampling signal Sc from the bridge resonant converter and a reference signal Sref corresponding to the output sampling signal Sc, and is configured to calculate the on-time Ts of the switching transistor in the first bridge unit 110 of the bridge resonant converter within the half switching period based on the output sampling signal Sc and the reference signal Sref. Specifically, the on-time Ts calculation unit 210 includes a calculation unit for calculating a difference between the output sampling signal Sc and the reference signal Sref, and a proportional-integral-derivative (PID) operation unit for obtaining the on-time Ts based on the difference. The output sampling signal Sc herein may be any signal indicative of a signal at an output terminal of the bridge resonant converter, such as an output voltage signal, an output current signal, or an output power signal, and the corresponding reference signal Sref may be a voltage reference signal, a current reference signal, or a power reference signal. As long as the on-time Ts can be obtained based on the sampling signal Sc and the reference signal Sref, it is acceptable.

As shown in FIG. 4, the controller 200 further includes a time generation unit 220, configured to receive the on-time Ts, the input voltage Vin, and the output voltage Vo to obtain the first time Ta and the second time Tb based on the on-time Ts, the input voltage Vin, and the output voltage Vo.

As shown in FIG. 4, the controller 200 further includes a drive signal generation unit 230, configured to receive the first time Ta and the second time Tb to output switching drive signals for driving the first upper transistor S1, the first lower transistor S2, the third upper transistor S3, the fourth lower transistor S4, and the bidirectional blocking switch Sa in the bridge resonant converter, thereby enabling the operating waveforms of the bridge resonant converter to approximate the ideal operating waveforms as shown in FIG. 3.

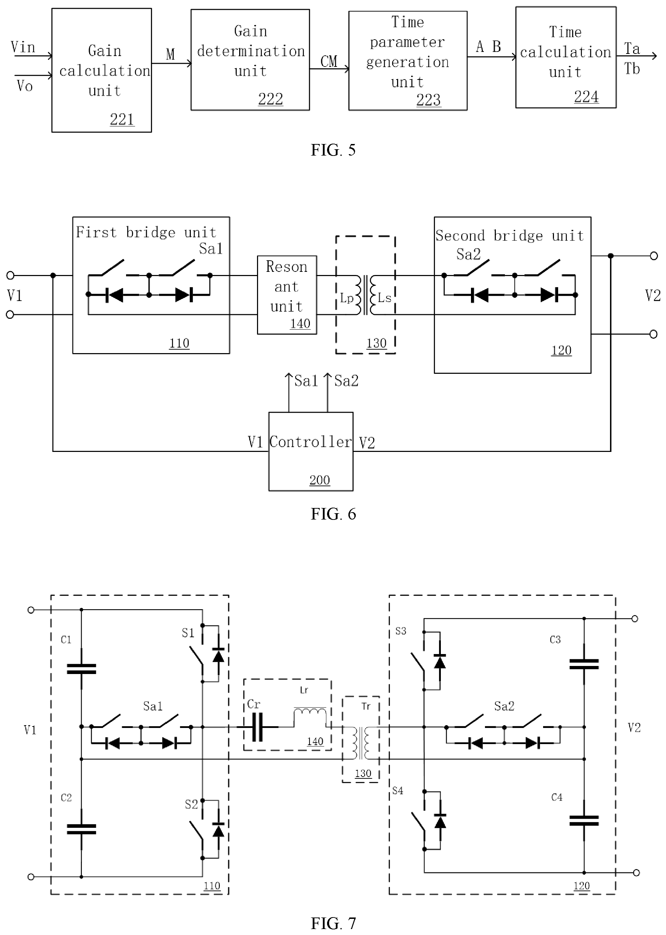

More specifically, reference is made to FIG. 5, which shows a schematic module diagram of a time generation unit in a controller. As shown in FIG. 5, the time generation unit 220 includes a gain calculation unit 221, configured to receive the input voltage Vin and the output voltage Vo to calculate the gain M of the bridge resonant converter, which can be specifically calculated according to the formula M = n*Vo/Vin, where n is the turn ratio of the windings of the transformer 130.

As shown in FIG. 5, the time generation unit 220 further includes a gain determination unit 222, configured to determine whether the gain M is greater than or equal to 1, and output a gain indication signal CM.

As shown in FIG. 5, the time generation unit 220 further includes a time parameter generation unit 223, configured to receive the gain indication signal CM to output the time parameters A and B. Specifically, A and B are selectively configured using the first relational expression or the second relational expression based on the gain indication signal CM. For the first relational expression and the second relational expression, reference can be made to the above description, and they will not be repeated herein.

As shown in FIG. 5, the time generation unit 220 further includes a time calculation unit 224, configured to obtain the first time Ta and the second time Tb based on the time parameters A and B and the on-time Ts, where A = Ta/Ts and B = Tb/Ts.

More specifically, as shown in FIG. 3, without considering the dead time, the duty cycle of the first upper transistor S1 and the first lower transistor S2 in the first bridge unit 110 is 50%. The bidirectional blocking switch Sa and the third upper transistor S3 jointly form a 50% duty cycle, and the bidirectional blocking switch Sa and the fourth lower transistor S4 jointly form a 50% duty cycle. Additionally, within each half switching period, the bidirectional blocking switch Sa is turned on before the third upper transistor S3 or the fourth lower transistor S4.

Based on the same principle as the aforementioned bridge resonant converter, the present application further provides a bidirectional bridge resonant converter. Referring to the schematic diagram of a bidirectional bridge resonant converter according to an embodiment of the present application as shown in FIG. 6, the bidirectional bridge resonant converter includes:
a first bridge unit 110, including a first bidirectional blocking switch Sa1;
a transformer 130, including a first winding Lp and a second winding Ls, where one terminal of the first bridge unit 110 is connected to the first winding Lp, and the other terminal thereof is configured to receive or output a first voltage V1, and the first bidirectional blocking switch Sa1 is connected between both terminals of the first winding Lp;
a second bridge unit 120, one terminal of the second bridge unit 120 is connected to the second winding Ls, and the other terminal thereof is configured to correspondingly output or receive a second voltage V2, and including a second bidirectional blocking switch Sa1 connected between both terminals of the second winding Ls;
a resonant unit 140, connected between the first bridge unit 110 and the first winding Lp or between the second bridge unit 120 and the second winding Ls; and
a controller 200, configured to receive the first voltage V1 and the second voltage V2, where
when the bidirectional bridge resonant converter is configured to convert the first voltage V1 into the second voltage V2, the controller 200 outputs, based on a first gain M1 between the second voltage V2 and the first voltage V1, a switching drive signal for controlling the second bidirectional blocking switch Sa2, such that the second bidirectional blocking switch Sa2 is turned on within a first time Ta; and
when the bidirectional bridge resonant converter is configured to convert the second voltage V2 into the first voltage V1, the controller 200 outputs, based on a second gain M2 between the first voltage V1 and the second voltage V2, a switching drive signal for controlling the first bidirectional blocking switch Sa1, such that the first bidirectional blocking switch Sa1 is turned on within a third time Ta3.

When the bidirectional bridge resonant converter is configured to convert the first voltage V1 into the second voltage V2, the converter shown in FIG. 6 is the same as the bridge resonant converter in FIG. 2. In this case, the first voltage V1 corresponds to the input voltage Vin, the second voltage V2 corresponds to the output voltage Vo, the first gain M1 corresponds to the gain M, and the second bidirectional blocking switch Sa2 corresponds to the bidirectional blocking switch Sa. Thus, its principle is the same as that described above.

In other words, each half switching period of the bidirectional bridge resonant converter includes the first time Ta.

A switching transistor in a bridge unit (i.e., the second bridge unit 120) at the output terminal is turned off with a delay of a second time Tb relative to a switching transistor in a bridge unit (i.e., the first bridge unit 110) at an input terminal that operates synchronously therewith.

When the first gain M1 is greater than or equal to 1 and when the first gain M1 is less than 1, the length of the first time Ta and the length of the second time Tb are set differently. More specifically, when the first gain M1 is greater than or equal to 1, the length of the first time Ta and the length of the second time Tb are configured according to a first relational expression; and when the first gain M1 is less than 1, the length of the first time Ta and the length of the second time Tb are configured according to a second relational expression. More specifically, in the first relational expression, the first time Ta is related to an on-time Ts of the switching transistor in the first bridge unit 110 within the half switching period, the first gain M1, and the second time Tb, and the second time Tb is related to the on-time Ts of the switching transistor in the first bridge unit 110 within the half switching period; and in the second relational expression, the first time Ta is related to the on-time Ts of the switching transistor in the first bridge unit within the half switching period, and the second time Tb is related to the on-time Ts of the switching transistor in the first bridge unit within the half switching period and the first gain M1. Its specific principle is the same as that described above, and will not be repeated herein.

Correspondingly, when the bidirectional bridge resonant converter is configured to convert the second voltage V2 into the first voltage V1, the converter shown in FIG. 6 is similar to the bridge resonant converter in FIG. 2. In this case, the second voltage V2 corresponds to the input voltage Vin, the first voltage V1 corresponds to the output voltage Vo, the second gain M2 corresponds to the gain M, the first bidirectional blocking switch Sa1 corresponds to the bidirectional blocking switch Sa, and the third time Ta3 corresponds to the first time Ta. Thus, its principle is the same as that described above.

That is, each half switching period of the bidirectional bridge resonant converter includes the third time Ta3.

The switching transistor in the bridge unit (i.e., the first bridge unit 110) at the output terminal is turned off with a delay of the second time Tb relative to the switching transistor in the bridge unit (i.e., the second bridge unit 120) at the input terminal that operates synchronously therewith.

When the second gain M2 is greater than or equal to 1 and when the second gain M2 is less than 1, the length of the third time Ta3 and the length of the second time Tb are set differently. More specifically, when the second gain M2 is greater than or equal to 1, the length of the third time Ta3 and the length of the second time Tb are configured according to the first relational expression; and when the second gain M2 is less than 1, the length of the third time Ta3 and the length of the second time Tb are configured according to the second relational expression. More specifically, in the first relational expression, the third time Ta3 is related to an on-time Ts of the switching transistor in the second bridge unit 120 within the half switching period, the second gain M2, and the second time Tb, and the second time Tb is related to the on-time Ts of the switching transistor in the second bridge unit 110 within the half switching period; and in the second relational expression, the third time Ta3 is related to the on-time Ts of the switching transistor in the second bridge unit within the half switching period, and the second time Tb is related to the on-time Ts of the switching transistor in the second bridge unit 120 within the half switching period and the second gain M2. Its specific principle is the same as that described above, and will not be repeated herein.

In a specific embodiment, similar to the bridge resonant converter shown in FIG. 2, both the first bridge unit 110 and the second bridge unit 120 are configured as half-bridge topologies. For details, reference can be made to FIG. 7, which shows a schematic circuit diagram of a bidirectional bridge resonant converter according to an embodiment of the present application. Both terminals of the first winding Lp are respectively connected to common nodes of two legs in the first bridge unit 110, and both terminals of the second winding Ls are respectively connected to common nodes of two legs in the second bridge unit 120.

In practical applications, for the unidirectional bridge resonant converter and the bidirectional bridge resonant converter, both the first bridge unit 110 and the second bridge unit 120 may be configured as full-bridge units. That is, the first bridge unit 110 and the second bridge unit 120 each include two switching legs connected in parallel, and each switching leg includes two switching transistors connected in series. For the full-bridge unit, the control principle of the switching transistors therein is the same as that in the prior art, and will not be repeated herein. Only the bidirectional blocking switch is turned on for the first time Ta before the switching transistor in the full-bridge unit at the output terminal is turned on, to achieve the advantages of the present application. Specifically, the first bidirectional blocking switch Sa1 is turned on for the third time Ta3 before the switching transistor in the full-bridge unit at the output terminal is turned on, or the second bidirectional blocking switch Sa2 is turned on for the third time Ta3 before the switching transistor in the full-bridge unit at the output terminal is turned on.

Similarly, one of the first bridge unit 110 and the second bridge unit 120 in the bridge resonant converter may be configured as a half-bridge unit, and the other as a full-bridge unit. Alternatively, one of the first bridge unit 110 and the second bridge unit 120 in the bridge resonant converter may be configured as a half-bridge unit, and the other as a three-level half-bridge unit. Alternatively, one of the first bridge unit 110 and the second bridge unit 120 in the bridge resonant converter may be configured as a full-bridge unit, and the other as a three-level half-bridge unit.

That is, the present application does not limit the specific structure of the bridge unit in the bridge resonant converter, as long as the bridge resonant converter includes a bidirectional blocking switch capable of short-circuiting the primary winding Lp (also referred to as the first winding) of the transformer and/or a bidirectional blocking switch capable of short-circuiting the secondary winding Ls (also referred to as the second winding) of the transformer.

The controller 200 described above is a digital controller, such as a digital signal processor (DSP) or a microcontroller unit (MCU). That is, the control modules in the controller 200 are all implemented by programming, and no additional detection circuit is required in the present application. Therefore, the solution of the present application requires no change to the hardware circuit, resulting in low cost and simple operation.

In the above embodiment, the bidirectional blocking switch is configured to include two switching transistors connected in series, where a diode is connected in parallel with each switching transistor, and the anodes of the two diodes are connected together. Thus, the bidirectional blocking switch is capable of bidirectional conduction and bidirectional blocking. Certainly, the bidirectional blocking switch may also be configured in other structures, as long as it can achieve bidirectional conduction and bidirectional blocking.

Further, according to the above description, the bridge resonant converter of the present application determines the on-time of the bidirectional blocking switch based on the real-time sampled input voltage, output voltage, and output sampling signal, thereby achieving good control timeliness and improving the performance of the bridge resonant converter.

Although the embodiments of the present disclosure and their advantages have been described in detail, it should be understood that various changes, substitutions, and alterations can be made herein without departing from the spirit and scope of the present disclosure as defined by the appended claims.

In addition, the scope of the present application is not intended to be limited to the specific embodiments of the processes, machines, manufactures, compositions of matter, devices, methods, and steps described in the specification. As will be readily understood by those of ordinary skill in the art from the present disclosure, processes, machines, manufactures, compositions of matter, means, methods, or steps that perform substantially the same function, currently existing or to be developed later, will achieve substantially the same results as the corresponding embodiments described herein in accordance with the present disclosure. Therefore, the appended claims are intended to include within their scope such processes, machines, manufactures, compositions of matter, devices, methods, or steps.

## Claims

1. A bridge resonant converter, **characterized by** comprising:
a first bridge unit;
a transformer, comprising a primary winding and a secondary winding, wherein one terminal of the first bridge unit is connected to the primary winding, and the other terminal thereof is configured to receive an input voltage;
a second bridge unit, one terminal of the second bridge unit is connected to the secondary winding, and the other terminal thereof is configured to provide an output voltage, and comprising a bidirectional blocking switch connected between both terminals of the secondary winding;
a resonant unit, connected between the first bridge unit and the primary winding or between the second bridge unit and the secondary winding; and
a controller, configured to receive the input voltage and the output voltage, and output, based on a gain between the output voltage and the input voltage, a switching drive signal for controlling the bidirectional blocking switch, such that the bidirectional blocking switch is turned on within a first time.

2. The bridge resonant converter according to claim 1, **characterized in that** each half switching period of the bridge resonant converter comprises the first time.

3. The bridge resonant converter according to claim 1 or 2, **characterized in that** a switching transistor in the second bridge unit is turned off with a delay of a second time relative to a switching transistor in the first bridge unit that operates synchronously therewith.

4. The bridge resonant converter according to claim 3, **characterized in that** when the gain is greater than or equal to 1 and when the gain is less than 1, a length of the first time and a length of the second time are set differently.

5. The bridge resonant converter according to claim 4, **characterized in that** when the gain is greater than or equal to 1, the length of the first time and the length of the second time are configured according to a first relational expression; and when the gain is less than 1, the length of the first time and the length of the second time are configured according to a second relational expression.

6. The bridge resonant converter according to claim 5, **characterized in that** in the first relational expression, the first time is related to an on-time of the switching transistor in the first bridge unit within the half switching period, the gain, and the second time, and the second time is related to the on-time of the switching transistor in the first bridge unit within the half switching period; and
in the second relational expression, the first time is related to the on-time of the switching transistor in the first bridge unit within the half switching period, and the second time is related to the on-time of the switching transistor in the first bridge unit within the half switching period and the gain.

7. The bridge resonant converter according to claim 1, **characterized in that** the first bridge unit is configured as a half-bridge topology, and both terminals of the primary winding are respectively connected to common nodes of two legs in the first bridge unit.

8. The bridge resonant converter according to claim 7, **characterized in that** the second bridge unit is configured as a half-bridge topology, a full-bridge topology, or a three-level half-bridge topology.

9. A bidirectional bridge resonant converter, **characterized by** comprising:
a first bridge unit, comprising a first bidirectional blocking switch;
a transformer, comprising a first winding and a second winding, wherein one terminal of the first bridge unit is connected to the first winding, and the other terminal thereof is configured to receive or output a first voltage, and the first bidirectional blocking switch is connected between both terminals of the first winding;
a second bridge unit, one terminal of the second bridge unit is connected to the second winding, and the other terminal thereof is configured to correspondingly output or receive a second voltage, and comprising a second bidirectional blocking switch connected between both terminals of the second winding;
a resonant unit, connected between the first bridge unit and the first winding or between the second bridge unit and the second winding; and
a controller, configured to receive the first voltage and the second voltage, wherein
when the bidirectional bridge resonant converter is configured to convert the first voltage into the second voltage, the controller outputs, based on a first gain between the second voltage and the first voltage, a switching drive signal for controlling the second bidirectional blocking switch, such that the second bidirectional blocking switch is turned on within a first time; and
when the bidirectional bridge resonant converter is configured to convert the second voltage into the first voltage, the controller outputs, based on a second gain between the first voltage and the second voltage, a switching drive signal for controlling the first bidirectional blocking switch, such that the first bidirectional blocking switch is turned on within a third time.

10. The bidirectional bridge resonant converter according to claim 9, **characterized in that** each half switching period of the bidirectional bridge resonant converter comprises the first time or the third time.

11. The bidirectional bridge resonant converter according to claim 9, **characterized in that** a switching transistor in a bridge unit at an output terminal is turned off with a delay of a second time relative to a switching transistor in a bridge unit at an input terminal that operates synchronously therewith.

12. The bidirectional bridge resonant converter according to claim 11, **characterized in that** when the first gain is greater than or equal to 1 and when the first gain is less than 1, a length of the first time and a length of the second time are set differently; and
when the second gain is greater than or equal to 1 and when the second gain is less than 1, a length of the third time and the length of the second time are set differently.

13. The bidirectional bridge resonant converter according to claim 12, **characterized in that** when the first gain is greater than or equal to 1, the length of the first time and the length of the second time are configured according to a first relational expression; when the first gain is less than 1, the length of the first time and the length of the second time are configured according to a second relational expression;
when the second gain is greater than or equal to 1, the length of the third time and the length of the second time are configured according to the first relational expression; and when the second gain is less than 1, the length of the third time and the length of the second time are configured according to the second relational expression.

14. The bidirectional bridge resonant converter according to claim 13, **characterized in that** when the bidirectional bridge resonant converter is configured to convert the first voltage into the second voltage, in the first relational expression, the first time is related to an on-time of a switching transistor in the first bridge unit within the half switching period, the first gain, and the second time, and the second time is related to the on-time of the switching transistor in the first bridge unit within the half switching period; and in the second relational expression, the first time is related to the on-time of the switching transistor in the first bridge unit within the half switching period, and the second time is related to the on-time of the switching transistor in the first bridge unit within the half switching period and the first gain; and
when the bidirectional bridge resonant converter is configured to convert the second voltage into the first voltage, in the first relational expression, the third time is related to an on-time of a switching transistor in the second bridge unit within the half switching period, the second gain, and the second time, and the second time is related to the on-time of the switching transistor in the second bridge unit within the half switching period; and in the second relational expression, the first time is related to the on-time of the switching transistor in the second bridge unit within the half switching period, and the second time is related to the on-time of the switching transistor in the second bridge unit within the half switching period and the second gain.

15. The bidirectional bridge resonant converter according to claim 9, **characterized in that** the first bridge unit is configured as a half-bridge topology, and both terminals of the first winding are respectively connected to common nodes of two legs in the first bridge unit.

16. The bidirectional bridge resonant converter according to claim 15, **characterized in that** the second bridge unit is configured as a half-bridge topology, a full-bridge topology, or a three-level half-bridge topology.
